# DEMANDE DE BREVET EUROPEEN

(11) **EP 3 000 661 A1**
(43) Date de publication de la demande: **30.03.2016**
(21) Numéro de dépôt: 15187215.7
(22) Date de dépôt: 28.09.2015
(51) Int. Cl.: B60R 5/04

(54) **SYSTÈME DE RECOUVREMENT D'UN COMPARTIMENT À BAGAGES DE VÉHICULE AUTOMOBILE**

(30) Priorité: 29.09.2014 FR 1459214
(71) Demandeur: Cera APS, 51100 Reims (FR)
(72) Inventeur: BONFILS, Xavier, 51100 Reims (FR); BRILLON, Eric, 51390 Rosnay (FR)
(74) Mandataire: Sayettat, Julien Christian

(57) **Abrégé**

L'invention concerne un système (1) comprenant, disposés latéralement de part et d'autre du compartiment : un bras (12) respectif monté en rotation selon un premier axe (13) transversal sur un montant (4) respectif, ledit axe étant situé au-dessus de l'ébénisterie (3) correspondante, ledit bras comprenant une première extrémité (14) de rotation et une deuxième extrémité (15) pourvue d'un moyen d'emboitement réciproque (16) ; un dispositif de verrouillage (35) réversible dudit bras en position abaissée, ledit dispositif étant désactivable de manière à permettre un déplacement dudit bras en position relevée, les moyen (10) et moyen réciproque (16) coopérant entre eux dans l'une et l'autre desdites positions pour permettre un maintien du rideau (5) en configuration déployée lorsque ledit dispositif est activé et en configuration semi-déployée lorsque ledit dispositif est désactivé.

## Description

L'invention concerne un système de recouvrement d'un compartiment à bagages d'un véhicule automobile.

Il est connu de réaliser un système de recouvrement d'un compartiment à bagages de véhicule automobile, ledit système comprenant un cache bagages, deux ébénisteries latérales de garnissage dudit compartiment et deux montants de baie arrière, lesdits montants étant fixes par rapport auxdites ébénisteries, ledit cache-bagages comprenant :
- un rideau souple rétractable comprenant un bord avant et un bord arrière,
- un dispositif de rappel dudit rideau associé audit bord avant, de sorte que ledit rideau soit mobile entre une configuration rétractée de rangement et une configuration déployée de recouvrement des bagages,
- une bavette de rigidification associée le long dudit bord arrière, ladite bavette étant pourvue de deux moyens d'emboitement latéraux respectifs.

On connait par ailleurs des systèmes permettant une rétraction partielle du rideau en configuration semi-déployée, configuration permettant un accès facilité aux bagages tout en conservant la faculté de laisser des objets posés sur le rideau, le bord arrière du rideau se relevant à mesure de la rétraction dudit rideau, ceci afin d'optimiser l'accès aux bagages.

Dans les réalisations connues, le passage de la configuration rétractée ou semi-déployée à la configuration déployée se fait notamment par traction manuelle vers l'arrière exercée sur la bavette, notamment au moyen d'une poignée de préhension prévue en partie médiane de ladite bavette.

Un agencement connu prévoit que les moyens d'emboitement puissent s'engager, pour atteindre une configuration semi-déployée du rideau, dans des guides prévus sur les montants de baie.

Cependant, un tel agencement s'avère très complexe à mettre en oeuvre dans le cas de montants qui, vus par l'arrière, se rapprochent l'un de l'autre à mesure que l'on s'élève, puisqu'il faut assurer un maintien des moyens d'emboitement dans les guides dans toutes leurs positions d'élévation.

Il est également complexe de mettre en oeuvre un tel agencement dans le cas de montants verticaux en vue latérale.

En effet, dans un tel cas, l'effort de traction exercé sur le rideau par le dispositif de rappel augmente à mesure que les moyens d'emboitement s'élèvent, ce qui fait que le relevage du bord arrière du rideau ne peut être assuré par ledit dispositif.

Il en résulte notamment la nécessité de réaliser un relevage motorisé des moyens d'emboitement, ce qui ajoute à la complexité du système.

En variante, des agencements connus peuvent mettre en oeuvre des bras articulés par une extrémité, selon un axe transversal, en partie médiane des ébénisteries et aptes à recevoir sur l'autre extrémité les moyens d'emboitement.

Dans de telles réalisations, du fait du positionnement sensiblement à même hauteur de l'axe et des moyens d'emboitement lorsque le rideau est en configuration déployée, la rétraction dudit rideau en configuration semi-déployée se fait, sous l'effet du dispositif de rappel, avec une vitesse de rotation croissante des bras, ceci du fait de l'augmentation de l'effet « bras de levier » déployé à mesure du relevage des bras.

Il en résulte un laps de temps pouvant être important pour bénéficier d'un relevage suffisant du bord arrière du rideau pour accéder aisément aux bagages, la fin de rotation se faisant de façon brutale, s'accompagnant d'une sensation déplaisante de « claquage » pour l'utilisateur.

En outre, dans un tel agencement, lorsque les montants en vue arrière se rapprochent l'un de l'autre à mesure que l'on s'élève, peut se poser le problème d'une interférence entre les bras et les montants lors de la rétraction du rideau en configuration semi-déployée.

L'invention a pour but de pallier ces inconvénients.

A cet effet, l'invention propose un système de recouvrement d'un compartiment à bagages de véhicule automobile, ledit système comprenant un cache bagages, deux ébénisteries latérales de garnissage dudit compartiment et deux montants de baie arrière, lesdits montants étant fixes par rapport auxdites ébénisteries, ledit cache-bagages comprenant :
- un rideau souple rétractable comprenant un bord avant et un bord arrière,
- un dispositif de rappel dudit rideau associé audit bord avant, de sorte que ledit rideau soit mobile entre une configuration rétractée de rangement et une configuration déployée de recouvrement des bagages,
- une bavette de rigidification associée le long dudit bord arrière, ladite bavette étant pourvue de deux moyens d'emboitement latéraux respectifs,
ledit système comprenant en outre, disposés latéralement de part et d'autre dudit compartiment :
- un bras respectif monté en rotation selon un premier axe transversal sur un montant respectif, ledit axe étant situé au-dessus de l'ébénisterie correspondante, ledit bras comprenant une première extrémité de rotation et une deuxième extrémité pourvue d'un moyen d'emboitement réciproque,
- un dispositif de verrouillage réversible dudit bras en position abaissée, ledit dispositif étant désactivable de manière à permettre un déplacement dudit bras en position relevée, lesdits moyen et moyen réciproque coopérant entre eux dans l'une et l'autre desdites positions pour permettre un maintien dudit rideau en configuration déployée lorsque ledit dispositif est activé et en configuration semi-déployée lorsque ledit dispositif est désactivé.

Dans cette description, les termes de positionnement dans l'espace (haut, bas, transversal, latéral, avant, arrière, dessus, vertical,...) sont pris en référence au système en place dans le véhicule.

L'agencement proposé peut être aisément mis en oeuvre dans le cas de montants qui, vus par l'arrière, se rapprochent l'un de l'autre à mesure que l'on s'élève, ceci dans la mesure où les bras se déploient sans interférer avec lesdits montants lorsque le rideau est amené en configuration semi-déployée.

Il est également aisé de mettre en oeuvre un tel agencement dans le cas de montants verticaux en vue latérale.

En effet, avec l'agencement proposé, le dispositif de rappel exerce une traction sur le rideau quelle que soit la position des bras, ce qui évite de devoir recourir à un moyen motorisé pour le mettre en configuration semi-déployée.

En outre, avec l'agencement proposé, la rétraction du rideau en configuration semi-déployée se fait avec une vitesse de rotation des bras qui décroit progressivement, ceci du fait de la diminution de l'effet « bras de levier » déployé à mesure du relevage des bras.

Il en résulte un court laps de temps pour bénéficier d'un relevage suffisant du bord arrière du rideau pour accéder aisément aux bagages.

Par ailleurs, la fin de rotation se fait de façon atténuée, sans être accompagnée d'une sensation déplaisante de « claquage » pour l'utilisateur.

D'autres particularités et avantages de l'invention apparaîtront dans la description qui suit, faite en référence aux figures jointes, dans lesquelles :
- la figure 1 est une vue schématique en perspective d'un système selon une réalisation, le rideau de cache bagages étant en configuration semi-déployée,
- les figures 2 sont des vues schématiques en perspective partielle du système de la figure 1, le bras étant en position abaissée (2a) et relevée (2b),
- les figures 3 sont des vues latérales schématiques partielles du système des figures précédentes dans lesquelles :
   o en figure 3a : le bras est en position abaissée et le dispositif de verrouillage est activé, l'élément rotatif étant en position de blocage du doigt,
   o en figure 3b : le bras est en position abaissée et le dispositif de verrouillage est désactivé,
   o en figure 3c : le bras est en mouvement vers sa position relevée,
   o en figure 3d : le bras est en position relevée,
   o en figure 3e : le bras est en position abaissée et le dispositif de verrouillage est activé, l'élément rotatif étant en position permettant le passage du doigt,
   o en figure 3f : le bras est en position abaissée et le dispositif de verrouillage est activé, le doigt étant en cours de dégagement ou d'engagement dans la fente de l'élément rotatif,
   o en figure 3g : le bras est en position abaissée et le dispositif de verrouillage est activé, le doigt étant en position intermédiaire prise lorsque le rideau est actionné entre sa configuration rétractée et sa configuration déployée.

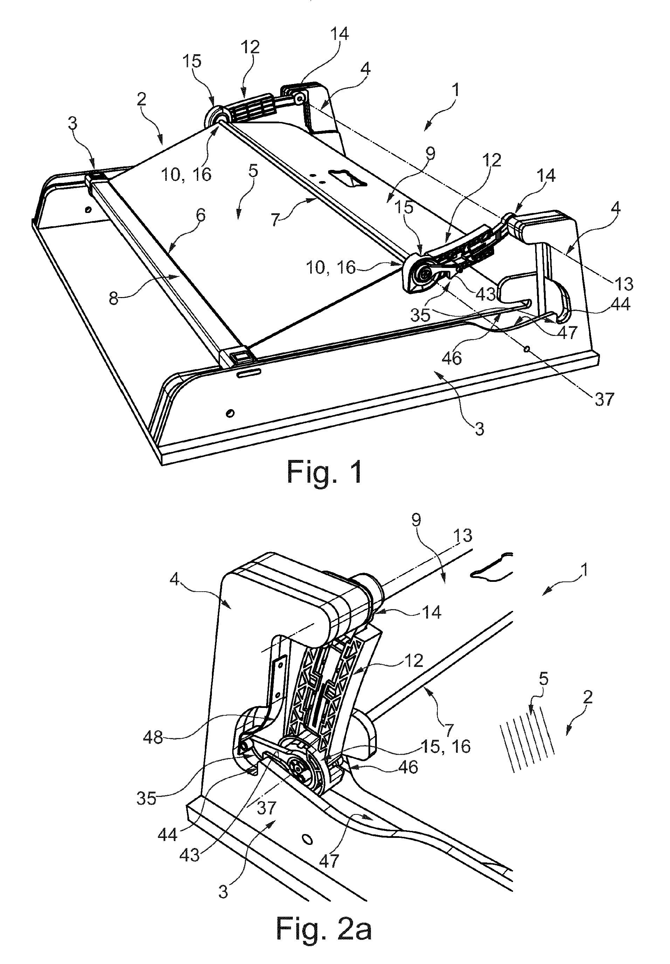

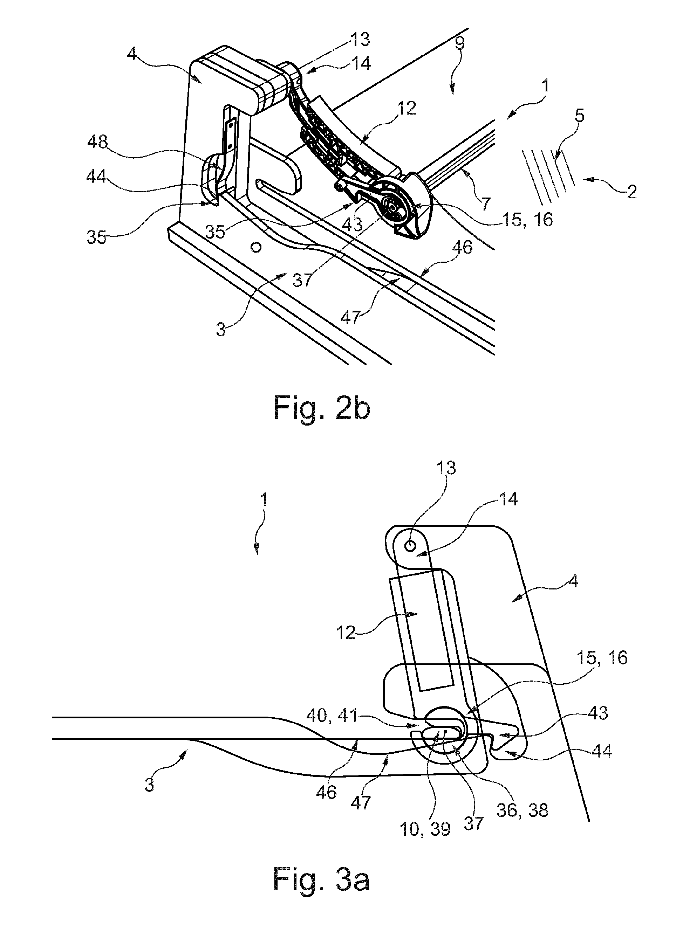

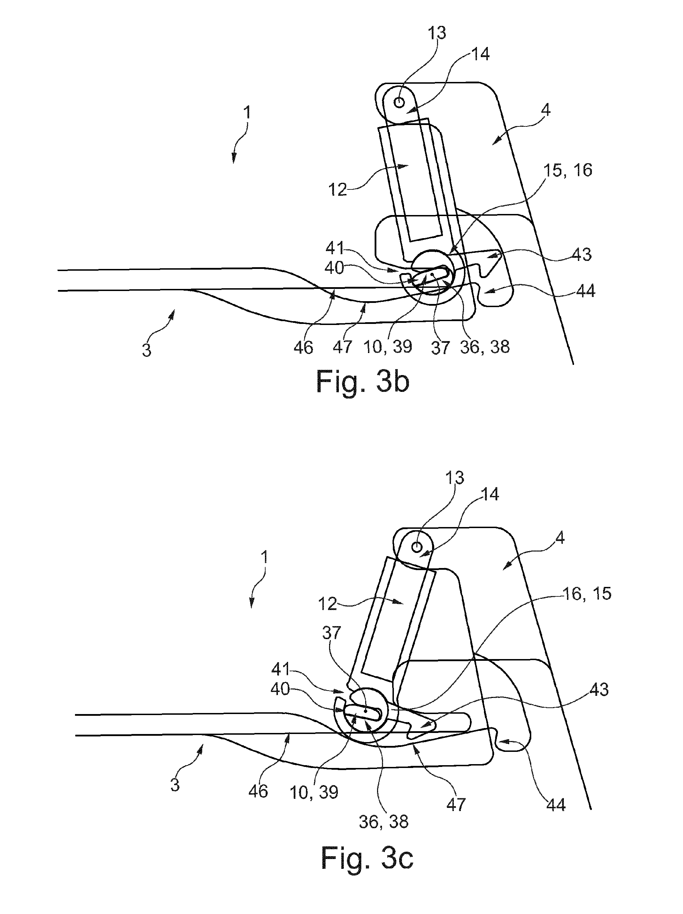

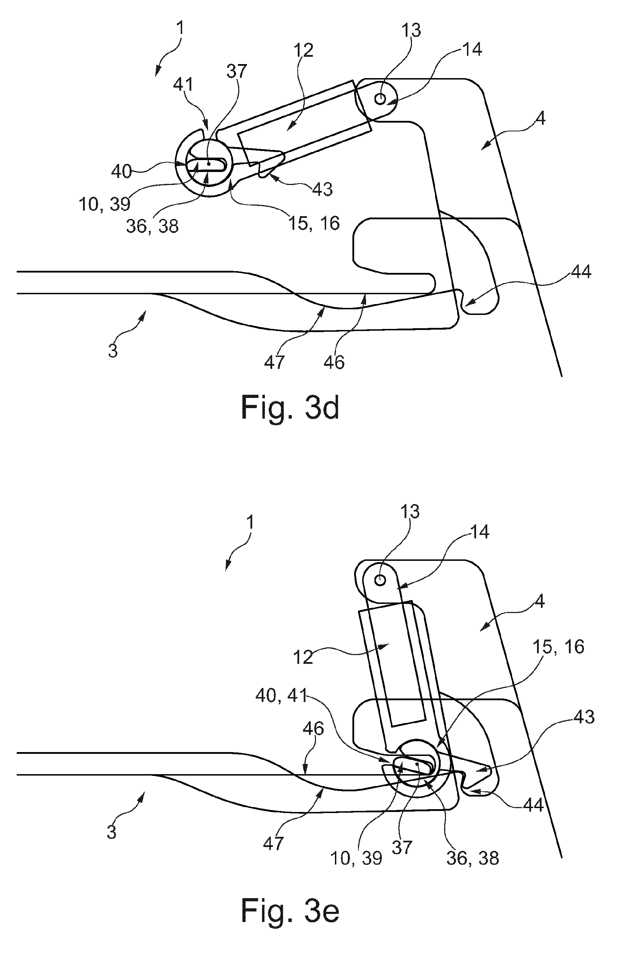

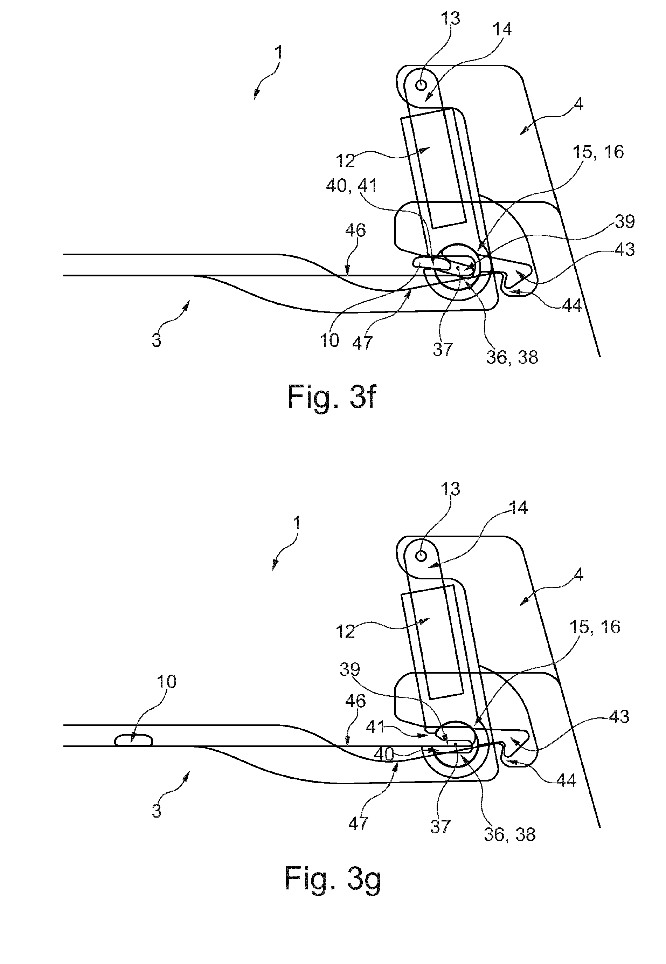

En référence aux figures, on décrit un système 1 de recouvrement d'un compartiment à bagages de véhicule automobile, ledit système comprenant un cache bagages 2, deux ébénisteries 3 latérales de garnissage dudit compartiment et deux montants 4 de baie arrière, lesdits montants étant fixes par rapport auxdites ébénisteries, ledit cache-bagages comprenant :
- un rideau 5 souple rétractable comprenant un bord avant 6 et un bord arrière 7,
- un dispositif de rappel 8 dudit rideau - notamment sous forme d'un arbre d'enroulement actionné en enroulement par un ressort - associé audit bord avant, de sorte que ledit rideau soit mobile entre une configuration rétractée de rangement et une configuration déployée de recouvrement des bagages,
- une bavette 9 de rigidification associée le long dudit bord arrière, ladite bavette étant pourvue de deux moyens d'emboitement 10 latéraux respectifs,
ledit système comprenant en outre, disposés latéralement de part et d'autre dudit compartiment :
- un bras 12 respectif monté en rotation selon un premier axe 13 transversal sur un montant 4 respectif, ledit axe étant situé au-dessus de l'ébénisterie 3 correspondante, ledit bras comprenant une première extrémité 14 de rotation et une deuxième extrémité 15 pourvue d'un moyen d'emboitement réciproque 16,
- un dispositif de verrouillage 35 réversible dudit bras en position abaissée (figure 3a), ledit dispositif étant désactivable (figure 3b) de manière à permettre un déplacement dudit bras en position relevée (figure 3c), lesdits moyen et moyen réciproque coopérant entre eux dans l'une et l'autre desdites positions pour permettre un maintien dudit rideau en configuration déployée (figures 2a et 3a) lorsque ledit dispositif est activé et en configuration semi-déployée (figure 2b et 3d) lorsque ledit dispositif est désactivé.

On précise ici que le passage de la configuration rétractée ou semi-déployée à la configuration déployée se fait notamment par traction manuelle vers l'arrière exercée sur la bavette 9.

Selon la réalisation représentée, le système 1 présente latéralement de part et d'autre les caractéristiques suivantes :
- le moyen d'emboitement 10 est sous forme d'un doigt aplati saillant transversalement de la bavette 9 - ici en avant de ladite bavette,
- le moyen d'emboitement réciproque 16 est sous forme d'un élément 36 - ici en forme de disque - monté en rotation, selon un axe transversal annexe 37, dans un logement 38 - ici épousant la forme extérieure du disque - prévu en deuxième extrémité 15 et débouchant vers l'intérieur du compartiment,

- ledit élément comprend une fente 39 de réception dudit doigt, ladite fente débouchant vers l'intérieur du compartiment,
- ladite fente comprend une première ouverture 40 radiale, ledit logement comprenant une deuxième ouverture 41 radiale de passage dudit doigt vers ladite première ouverture,
- ladite fente et ledit doigt sont dimensionnés de manière à se coupler en rotation lorsqu'ils sont emboités l'un avec l'autre,
- ledit élément est sollicité par un moyen ressort, non représenté, pour adopter une position angulaire de blocage dudit doigt (figures 3a à 3d) où ladite première ouverture est obstruée, au moins partiellement, par la paroi dudit logement,

Selon la réalisation représentée, le moyen ressort sollicite l'élément 36 de sorte que la première ouverture 40 soit seulement partiellement obstruée par la paroi du logement 38, ladite première ouverture présentant une forme agencée - ici en biseau - pour réaliser, en début d'introduction du doigt dans la fente 39, une rotation de l'élément 36 la désobstruant pour permettre le passage dudit doigt (figures 3e et 3f), ledit doigt une fois introduit se bloquant dans ladite fente par retour dudit élément en position de blocage (figure 3a).

Selon la réalisation représentée, le dispositif 35 de verrouillage comprend :
- un crochet 43, solidaire - au moins partiellement - en rotation de l'élément 36, ledit crochet étant dirigé vers le bas et saillant radialement dudit élément vers l'arrière,
- un cran 44 disposé en arrière de l'ébénisterie 3, ledit crochet s'insérant dans ledit cran quand ledit dispositif est activé, la désactivation dudit dispositif se faisant par mise en rotation dudit élément.

Dans la réalisation représentée, comme on peut l'observer sur les figures 3d et 3e, l'élément 36 présente la faculté de débattre angulairement sur une faible plage angulaire sans entrainer le crochet 43 en rotation, de manière à permettre une introduction/extraction du doigt dans/de la fente 39 sans mettre en mouvement ledit crochet.

Selon la réalisation représentée, les moyens d'emboitement 10 sont solidaires en rotation de la bavette 9, de sorte que, à partir de la configuration déployée du rideau 5 :
- le passage dudit rideau en configuration rétractée se fasse par mise en rotation, autour de l'axe annexe 37, de ladite bavette vers le bas
- le passage dudit rideau en configuration semi-déployée, se fasse par mise en rotation de ladite bavette, autour dudit axe annexe, vers le haut, de manière à désactiver le dispositif 35, la désactivation dudit dispositif se faisant par rotation du doigt entrainant une rotation de l'élément 36 et une rotation du crochet 43.

Selon la réalisation représentée, le moyen ressort est disposé entre le bras 12 et le premier axe 13 de rotation, ledit bras étant monté en débattement radial par rapport audit axe - par exemple au moyen d'une lumière de coulissement de l'axe 13 dans la première extrémité 14 -, de sorte que la deuxième extrémité 15 soit sollicitée en écartement dudit axe, l'élément 36 étant sollicité pour adopter la position angulaire de blocage par appui du crochet 43 sur le cran 44.

Selon une variante de réalisation non représentée, les bras 12 comprennent une première et une deuxième partie, comprenant respectivement la première 14 et la deuxième 15 extrémité, lesdites parties étant montées en coulissement axial-c'est-à-dire selon l'axe selon lequel s'étendent lesdits bras - l'une par rapport à l'autre de manière à permettre, lors du passage du rideau 5 de la configuration déployée à la configuration semi-déployée, un passage desdits bras d'un état rétracté à un état étendu libérant un accès élargi aux bagages, lesdites parties étant reliées l'une à l'autre par l'intermédiaire du moyen ressort de manière à assister le déploiement desdits bras à l'état étendu lors de la mise dudit rideau en configuration semi-déployée.

Selon la réalisation représentée, chaque ébénisterie 3 comprend :
- une première piste 46 de guidage d'un moyen d'emboitement 10 vers son moyen réciproque 16,
- une deuxième piste 47, décalée transversalement par rapport à ladite première piste, de guidage de la deuxième extrémité 15 de bras 12 lors du passage du rideau 5 de la configuration semi-déployée à la configuration déployée.

Selon la réalisation représentée, le système 1 comprend en outre, latéralement de part et d'autre, une lame ressort 48 respective - ici solidaire de l'ébénisterie 3 - d'actionnement du crochet 43 vers le cran 44 lors du passage du rideau 5 de la configuration semi-déployée à la configuration déployée.

## Revendications

1. Système (1) de recouvrement d'un compartiment à bagages de véhicule automobile, ledit système comprenant un cache bagages (2), deux ébénisteries (3) latérales de garnissage dudit compartiment et deux montants (4) de baie arrière, lesdits montants étant fixes par rapport auxdites ébénisteries, ledit cache-bagages comprenant :
• un rideau (5) souple rétractable comprenant un bord avant (6) et un bord arrière (7),
• un dispositif de rappel (8) dudit rideau associé audit bord avant, de sorte que ledit rideau soit mobile entre une configuration rétractée de rangement et une configuration déployée de recouvrement des bagages,
• une bavette (9) de rigidification associée le long dudit bord arrière, ladite bavette étant pourvue de deux moyens d'emboitement (10) latéraux respectifs,
ledit système étant **caractérisé en ce qu'**il comprend en outre, disposés latéralement de part et d'autre dudit compartiment :
• un bras (12) respectif monté en rotation selon un premier axe (13) transversal sur un montant (4) respectif, ledit axe étant situé au-dessus de l'ébénisterie (3) correspondante, ledit bras comprenant une première extrémité (14) de rotation et une deuxième extrémité (15) pourvue d'un moyen d'emboitement réciproque (16),
• un dispositif de verrouillage (35) réversible dudit bras en position abaissée, ledit dispositif étant désactivable de manière à permettre un déplacement dudit bras en position relevée, lesdits moyen et moyen réciproque coopérant entre eux dans l'une et l'autre desdites positions pour permettre un maintien dudit rideau en configuration déployée lorsque ledit dispositif est activé et en configuration semi-déployée lorsque ledit dispositif est désactivé.

2. Système (1) selon la revendication 1, **caractérisé en ce qu'**il présente latéralement de part et d'autre les caractéristiques suivantes :
• le moyen d'emboitement (10) est sous forme d'un doigt aplati saillant transversalement de la bavette (9),
• le moyen d'emboitement réciproque (16) est sous forme d'un élément (36) monté en rotation, selon un axe transversal annexe (37), dans un logement (38) prévu en deuxième extrémité (15) et débouchant vers l'intérieur du compartiment,
• ledit élément comprend une fente (39) de réception dudit doigt, ladite fente débouchant vers l'intérieur du compartiment,
• ladite fente comprend une première ouverture (40) radiale, ledit logement comprenant une deuxième ouverture (41) radiale de passage dudit doigt vers ladite première ouverture,
• ladite fente et ledit doigt sont dimensionnés de manière à se coupler en rotation lorsqu'ils sont emboités l'un avec l'autre,
• ledit élément est sollicité par un moyen ressort pour adopter une position angulaire de blocage dudit doigt où ladite première ouverture est obstruée, au moins partiellement, par la paroi dudit logement,

3. Système (1) selon la revendication 2, **caractérisé en ce que** le moyen ressort sollicite l'élément (36) de sorte que la première ouverture (40) soit seulement partiellement obstruée par la paroi du logement (38), ladite première ouverture présentant une forme agencée pour réaliser, en début d'introduction du doigt dans la fente (39), une rotation de l'élément (36) la désobstruant pour permettre le passage dudit doigt, ledit doigt une fois introduit se bloquant dans ladite fente par retour dudit élément en position de blocage.

4. Système (1) selon l'une des revendications 2 ou 3, **caractérisé en ce que** le dispositif (35) de verrouillage comprend :
• un crochet (43) solidaire - au moins partiellement - en rotation de l'élément (36), ledit crochet étant dirigé vers le bas et saillant radialement dudit élément vers l'arrière,
• un cran (44) disposé en arrière de l'ébénisterie (3), ledit crochet s'insérant dans ledit cran quand ledit dispositif est activé, la désactivation dudit dispositif se faisant par mise en rotation dudit élément.

5. Système (1) selon la revendication 4, **caractérisé en ce que** le moyen ressort est disposé entre le bras (12) et le premier axe (13) de rotation, ledit bras étant monté en débattement radial par rapport audit axe, de sorte que la deuxième extrémité (15) soit sollicitée en écartement dudit axe, l'élément (36) étant sollicité pour adopter la position angulaire de blocage par appui du crochet (43) sur le cran (44).

6. Système (1) selon l'une quelconque des revendications 2 à 5, **caractérisé en ce que** les moyens d'emboitement (10) sont solidaires en rotation de la bavette (9), de sorte que, à partir de la configuration déployée du rideau (5) :
• le passage dudit rideau en configuration rétractée se fasse par mise en rotation, autour de l'axe annexe (37), de ladite bavette vers le bas
• le passage dudit rideau en configuration semi-déployée, se fasse par mise en rotation de ladite bavette, autour dudit axe annexe, vers le haut, de manière à désactiver le dispositif (35).

7. Système (1) selon l'une quelconque des revendications 2 à 6, **caractérisé en ce que** les bras (12) comprennent une première et une deuxième partie, comprenant respectivement la première (14) et la deuxième (15) extrémité, lesdites parties étant montées en coulissement axial l'une par rapport à l'autre de manière à permettre, lors du passage du rideau (5) de la configuration déployée à la configuration semi-déployée, un passage desdits bras d'un état rétracté à un état étendu libérant un accès élargi aux bagages, lesdites parties étant reliées l'une à l'autre par l'intermédiaire du moyen ressort de manière à assister le déploiement desdits bras à l'état étendu lors de la mise dudit rideau en configuration semi-déployée.

8. Système (1) selon l'une quelconque des revendications 1 à 7, **caractérisé en ce que** chaque ébénisterie (3) comprend :
• une première piste (46) de guidage d'un moyen d'emboitement (10) vers son moyen réciproque (16),
• une deuxième piste (47), décalée transversalement par rapport à ladite première piste, de guidage de la deuxième extrémité (15) de bras (12) lors du passage du rideau (5) de la configuration semi-déployée à la configuration déployée.

9. Système (1) selon l'une quelconque des revendications 4 à 8, **caractérisé en ce qu'**il comprend en outre, latéralement de part et d'autre, une lame ressort (48) respective d'actionnement du crochet (43) vers le cran (44) lors du passage du rideau (5) de la configuration semi-déployée à la configuration déployée.
